(19)

Europäisches
Patentamt
European
Patent Office
Office européen
des brevets

(11) **EP 4 567 918 A1**

(12) **EUROPEAN PATENT APPLICATION**
published in accordance with Art. 153(4) EPC

(43) Date of publication:
**11.06.2025 Bulletin 2025/24**

(21) Application number: **23877682.7**

(22) Date of filing: **12.10.2023**

(51) International Patent Classification (IPC):
$H01M\ 4/133^{(2010.01)}$  $H01M\ 4/36^{(2006.01)}$
$H01M\ 4/583^{(2010.01)}$  $H01M\ 10/052^{(2010.01)}$
$H01M\ 4/02^{(2006.01)}$

(52) Cooperative Patent Classification (CPC):
**H01M 4/02; H01M 4/133; H01M 4/36; H01M 4/583;
H01M 10/052; Y02E 60/10**

(86) International application number:
**PCT/KR2023/015662**

(87) International publication number:
**WO 2024/080759 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2022 KR 20220132407
10.10.2023 KR 20230133971**

(71) Applicant: **LG Energy Solution, Ltd.
Seoul 07335 (KR)**

(72) Inventors:
• **PIAO, Lilin
Daejeon 34122 (KR)**
• **WOO, Sangwook
Daejeon 34122 (KR)**

(74) Representative: **Plasseraud IP
104 Rue de Richelieu
CS92104
75080 Paris Cedex 02 (FR)**

(54) **NEGATIVE ELECTRODE AND SECONDARY BATTERY**

(57)    The present invention relates to a negative electrode for a secondary battery including: a current collector; a first negative electrode active material layer provided on the current collector; and a second negative electrode active material layer provided on the first negative electrode active material layer, wherein the first negative electrode active material layer includes natural graphite subjected to isotropic pressure processing, and wherein the second negative electrode active material layer includes artificial graphite in the form of a secondary particle and artificial graphite in the form of a single particle, and a method for manufacturing a negative electrode for a secondary battery.

EP 4 567 918 A1

## Description

[Technical Field]

This application claims priority to and the benefit of Korean Patent Application No. 10-2022-0132407 filed in the Korean Intellectual Property Office on October 14, 2022, and Korean Patent Application No. 10-2023-0133971 filed in the Korean Intellectual Property Office on October 10, 2023, the entire contents of which are incorporated herein by reference.

The present invention relates to a negative electrode for a secondary battery and a secondary battery including the same.

[Background Art]

A secondary battery is universally applied not only to a portable device, but also to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels can be dramatically reduced and the advantage that no by-products are generated from the use of energy.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

As utilization of the secondary battery increases, various battery performances are required. Attempts have been made to add additives to the active material layer in order to improve battery performance. Some performance of the battery may be improved depending on the type of the additive, but some performance may rather deteriorate. Accordingly, research is needed on the selection or a combination of materials included in an electrode that can improve the performance required for a secondary battery.

[Detailed Description of the Invention]

[Technical Problem]

The present invention has been made in an effort to provide a negative electrode for a secondary battery with improved adhesive force and expansion performance, and a secondary battery including the same.

[Technical Solution]

An exemplary embodiment of the present invention provides a negative electrode for a secondary battery including: a current collector; a first negative electrode active material layer provided on the current collector; and a second negative electrode active material layer provided on the first negative electrode active material layer, wherein the first negative electrode active material layer includes natural graphite subjected to isotropic pressure processing, and wherein the second negative electrode active material layer includes artificial graphite in the form of a secondary particle and artificial graphite in the form of a single particle.

Another exemplary embodiment of the present invention provides a secondary battery including the negative electrode for a secondary battery according to the exemplary embodiment described above, a positive electrode, and a separator.

Still another exemplary embodiment of the present invention provides a method for manufacturing a negative electrode for a secondary battery, the method including: forming a first negative electrode active material layer on a current collector; and forming a second negative electrode active material layer on the first negative electrode active material layer, wherein the first negative electrode active material layer includes natural graphite subjected to isotropic pressure processing or natural graphite having a BET specific surface area of 1 $m^2/g$ to 3 $m^2/g$, and wherein the second negative electrode active material layer includes artificial graphite in the form of a secondary particle and artificial graphite in the form of a single particle.

[Advantageous Effects]

According to the negative electrode of the present invention, artificial graphite in the form of a secondary particle, natural graphite subjected to isotropic pressure processing, and artificial graphite in the form of a single particle are used for the negative electrode active material layer, so that a degree of orientation within the electrode is relatively low and a side reaction with the electrolyte is reduced, making it possible to improve the expansion performance of the electrode. In addition, the natural graphite subjected to isotropic pressure processing is formed at a lower part of the negative electrode active material layer, thereby maximizing the adhesive force of the negative electrode active material layer to achieve an improved rapid charging effect.

[Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "on" a reference portion, the element is positioned above or below the reference portion, and it does not necessarily mean that the element is positioned "above" or "on" in a direction opposite to gravity.

In the present specification, the term 'particle diameter' refers to an average particle diameter indicated by D50. D50 can be defined as a particle size at 50% of a particle size distribution, and can be measured using a laser diffraction method. For example, a method for measuring an average particle diameter (D50) of the positive electrode active material may include dispersing particles of the positive electrode active material in a dispersion medium, introducing the dispersion into a commercially available laser diffraction particle size measuring device (e.g., Microtrac MT 3000), irradiating the dispersion with ultrasonic waves of approximately 28 kHz with an output of 60 W, and then calculating an average particle diameter (D50) corresponding to 50% of the cumulative volume in the measuring device.

In the present specification, descriptions referred to only as "active material layer" without first and second expressions may be applied to both the first and second active material layers.

A negative electrode for a secondary battery according to an exemplary embodiment of the present specification includes a current collector; a first negative electrode active material layer provided on the current collector; and a second negative electrode active material layer provided on the first negative electrode active material layer, wherein the first negative electrode active material layer includes natural graphite subjected to isotropic pressure processing, and wherein the second negative electrode active material layer includes artificial graphite in the form of a secondary particle and artificial graphite in the form of a single particle. In other words, the negative electrode for a secondary battery includes the two-layered negative electrode active material layer, includes artificial graphite in the form of a secondary particle, natural graphite subjected to isotropic pressure processing, and artificial graphite in the form of a single particle, and arranges the natural graphite subjected to isotropic pressure processing at a lower part of the negative electrode active material layer. As a result, a negative electrode with excellent expansion performance and adhesive force can be obtained.

A method for manufacturing a negative electrode for a secondary battery according to another exemplary embodiment includes forming a first negative electrode active material layer on a current collector; and forming a second negative electrode active material layer on the first negative electrode active material layer, wherein the first negative electrode active material layer includes natural graphite subjected to isotropic pressure processing or natural graphite having a BET specific surface area of 1 $m^2/g$ to 3 $m^2/g$, and wherein the second negative electrode active material layer includes artificial graphite in the form of a secondary particle and artificial graphite in the form of a single particle.

In the present specification, the term "single particle" is a concept in contrast to the form of a secondary particle formed by agglomeration of tens to hundreds of primary particles, and means a particle composed of 10 or less primary particles. Specifically, in the present invention, the single particle may be a single particle composed of one primary particle, or may be a form of particle formed by agglomeration of several primary particles.

In the present specification, the term "primary particle" refers to the smallest unit of particle recognized when observing an active material through a scanning electron microscope, and the term "secondary particle" refers to a secondary structure formed by agglomeration of tens to hundreds of primary particles.

In the present specification, the term "particle" refers to a granule with a size of micron, and when magnified and observed, the particle can be identified as a 'grain' having a crystal form with a size of tens of nanometers. When the grain is further magnified and observed, it is possible to identify a separated region having a form in which atoms form a lattice structure in a predetermined direction, wherein the region is referred to as a 'crystallite'. A size of the particle observed by X-ray diffraction (XRD) is defined as a size of the crystallite. The size of the crystallite may be quantitatively determined from the Scherrer equation by using XRD data.

According to an exemplary embodiment of the present invention, the first negative electrode active material layer includes natural graphite subjected to isotropic pressure processing. The natural graphite subjected to isotropic pressure processing can be obtained through methods such as cold isostatic press (CIP). Specifically, spheronized granulated particles with adjusted size obtained by an airflow pulverizer are filled into a mold of a cold isostatic press device, all sides of the mold were filled with water, and then cold isostatic pressing is performed at a molding pressure of 90 MPa for 100 seconds. Thereafter, the spheronized granulated particles subjected to the cold isostatic pressing are disintegrated. Then, 100 parts by weight of the disintegrated spheronized granulated particles are mixed with 5 parts by weight of pitch (solid pitch) as a carbon coating material, and the resultant mixture is carbonized at a temperature of 1,250°C for 24 hours for carbon coating, resulting in natural graphite subjected to isotropic pressure processing. However, the method for manufacturing natural graphite subjected to isotropic pressure processing is not limited to the above description.

As described above, when a method such as cold isostatic press (CIP) is used in order to obtain natural graphite subjected to isotropic pressure processing, pressure can be isotropically applied to the raw material particles from all directions. Therefore, there is an advantage in that the raw material particles in the spheronized granulated particles have reduced internal voids and specific surface area.

According to an exemplary embodiment of the present invention, the first negative electrode active material layer includes the natural graphite subjected to isotropic pressure processing, so that the degree of orientation within the electrode is relatively low and a side reaction with the electrolyte is reduced, making it possible to improve the expansion performance of the electrode and to increase the adhesive force of the negative electrode active material layer.

According to an exemplary embodiment of the present invention, a BET specific surface area of the natural graphite may be 1 m²/g to 3 m²/g. By using natural graphite having a BET specific surface area within the above range, there is an advantage that the durability of the cell is improved. Specifically, if the BET specific surface area exceeds 3 m²/g, the durability decreases due to a side reaction with the electrolyte, and if the BET specific surface area is below 1 m²/g, it is difficult to implement such natural graphite and the natural graphite impedes electrolyte penetration. For example, the BET specific surface area may be 1.2 m²/g to 2.8 m²/g, 1.2 m²/g to 2.8 m²/g, 1.2 m²/g to 2.6 m²/g, or 1.4 m²/g to 2.4 m²/g.

In the present specification, the BET specific surface area may be measured, for example, by the BET (Brunauer-Emmett-Teller) measurement method using BELSORP (BET equipment) from BEL JAPAN using an adsorbed gas such as nitrogen.

According to an exemplary embodiment of the present invention, an average particle diameter (D50) of the natural graphite subjected to isotropic pressure processing may be 6 $\mu$m to 9 $\mu$m, 7 $\mu$m to 9 $\mu$m, or 8 $\mu$m to 9 $\mu$m. By using the natural graphite subjected to isotropic pressure processing with an average particle diameter (D50) within the above range, the effects (improved expansion performance of the electrode, increased adhesive force of the negative electrode active material layer) that can be obtained as the natural graphite subjected to isotropic pressure processing is included in the negative electrode active material layer can be maximized.

The average particle diameter (D50) of the natural graphite subjected to isotropic pressure processing can be controlled through a pulverizing process using an airflow pulverizer device. Specifically, flaky graphite with an average particle diameter (D50) of 200 $\mu$m was prepared and pulverized with the size being adjusted by an airflow pulverizer device. The pulverized flaky graphite is subjected to a spheronization process to obtain spheronized granulated particles. However, the isotropic pressure processing and the method of obtaining natural graphite with adjusted average particle diameter are not limited to the above description.

According to an exemplary embodiment of the present invention, the second negative electrode active material layer includes artificial graphite in the form of a secondary particle and artificial graphite in the form of a single particle.

According to an exemplary embodiment of the present invention, an average particle diameter (D50) of the artificial graphite in the form of a single particle may be 6 $\mu$m to 9 $\mu$m, 7 $\mu$m to 9 $\mu$m, or 8 $\mu$m to 9 $\mu$m.

According to an exemplary embodiment of the present invention, the average particle diameter (D50) of the artificial graphite in the form of a secondary particle may be 16 $\mu$m to 22 $\mu$m.

In an exemplary embodiment of the present invention, in order to obtain artificial graphite in the form of a single particle and artificial graphite in the form of a secondary particle having average particle diameters (D50) within the above ranges, a method of performing pulverization using a jet mill, performing heat treatment after pulverization, and the like may be used. Specifically, needle coke may be pulverized using a jet mill, and then sieved to obtain powder with an adjusted size. Additionally, the powder may be heat-treated (graphitized) at 3,000°C for 20 hours under an inert argon (Ar) gas atmosphere to prepare an artificial graphite primary particles (or single particles). The artificial graphite primary particles (single particles) and a binder such as petroleum-based pitch may be added and heat-treated at 1,000°C or higher for 10 hours to obtain artificial graphite secondary particles resulting from agglomeration of the artificial graphite primary particles.

In an exemplary embodiment of the present invention, an OI (004/110) of the artificial graphite in the form of a single particle is 35 or less or 25 or less.

The OI (004/110) of the second negative electrode active material layer is a value obtained through an X-ray diffraction analysis, and may be obtained using a general method for an X-ray diffraction analysis, such as JIS K 0131-1996. An OI value of a negative electrode may be expressed as C004/C110, where C004 represents a characteristic diffraction peak area of the (004) crystal plane and C110 represents a characteristic diffraction peak area of the (110) crystal plane.

The OI (004/110) of the artificial graphite in the form of a single particle in the second negative electrode active material layer is a value obtained through an X-ray diffraction analysis, and may be obtained using a general method for an X-ray diffraction analysis, for example, by using Bruker D4 Endeavor that is an X-ray diffraction analyzer. Furthermore, the OI value of the negative electrode may be expressed as I004/I110, where I004 represents a characteristic diffraction peak area of the (004) crystal plane and I110 represents a characteristic diffraction peak area of the (110) crystal plane.

These characteristics indicate the degree of orientation of graphite crystals in the second negative electrode active material layer. That is, the larger the OI value, the higher the degree of orientation of the graphite, and the lower the OI value, the lower the degree of orientation. When the degree of orientation of the graphite crystals is low, the expansion performance of the battery can be improved by expanding the battery at random locations rather than expanding only in a specific direction when charging the battery.

According to an exemplary embodiment of the present invention, an adhesive force of the first negative electrode active material layer to the current collector is 18 gF/cm or higher. Since the negative electrode of the present invention is formed such that the first negative electrode active material layer and the current collector are in contact with each other, the adhesive force of the natural graphite subjected to isotropic pressure processing, which is a material of the first negative electrode active material layer, has an effect on the adhesive force of the first negative electrode active material layer to the current collector.

According to an exemplary embodiment of the present invention, an adhesive force of the natural graphite subjected to isotropic pressure processing included in the first negative electrode active material layer is 18 gF/cm or higher. The adhesive force of the natural graphite subjected to isotropic pressure processing can be adjusted depending on a particle size distribution value.

In an exemplary embodiment of the present invention, the second negative electrode active material layer may include the artificial graphite in the form of a secondary particle in an amount of 30 to 90 parts by weight based on 100 parts by weight of the negative electrode active material. When the above range is satisfied, there is an advantage in improving the expansion performance and energy density of the battery.

In an exemplary embodiment of the present invention, the second negative electrode active material layer may include the artificial graphite in the form of a single particle in an amount of 10 to 30 parts by weight based on 100 parts by weight of the negative electrode active material. When the above range is satisfied, there is an advantage in improving the expansion performance and energy density of the battery.

According to an exemplary embodiment of the present specification, each of the negative electrode active material layers (the first negative electrode active material layer and the second negative electrode active material layer) may further include a negative electrode active material, in addition to the natural graphite subjected to isotropic pressure processing, the artificial graphite in the form of a secondary particle, and the artificial graphite in the form of a single particle, and a type of negative electrode active material further included is not limited.

In an exemplary embodiment of the present specification, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to a further exemplary embodiment of the present specification, the first negative electrode active material layer may further include a negative electrode binder, in addition to the natural graphite subjected to isotropic pressure processing, and the second negative electrode active material layer may further include a negative electrode binder, in addition to the artificial graphite in the form of a secondary particle and artificial graphite in the form of a single particle.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoridehexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 20 parts by weight or less, for example, preferably 0.3 part by weight or more and 20 parts by weight or less, and more preferably 0.5 part by weight or more and 10 parts by weight or less on the basis of 100 parts by weight of the negative electrode active material layer.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powders; a conductive whisker such as zinc oxide and potassium titanate; a conductive metal oxide such as titanium oxide; a conductive material such as polyphenylene derivative, and the like may be used. A content of the conductive material in the negative electrode active material layer may be 0.01 part by weight to 20 parts by weight, and preferably 0.03 part by weight to 18 parts by weight on the basis of 100 parts by weight of the negative electrode active material layer.

The negative electrode active material layer may further include a thickener such as sodium carboxymethyl cellulose (Na-CMC), carboxymethyl cellulose lithium (Li-CMC), and cellulose nanofiber (CNF).

In an exemplary embodiment of the present specification, a thickness of each of the first and second negative electrode active material layers may be 5 $\mu$m or greater and 500 $\mu$m or less.

According to an exemplary embodiment of the present specification, a thickness ratio of the first and second negative electrode active material layers (thickness of the first negative electrode active material layer: thickness of the second negative electrode active material layer) may be 3:7 to 5:5.

In an exemplary embodiment of the present specification, the negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 $\mu$m to 500 $\mu$m. However, the thickness of the current collector is not limited thereto.

An additional exemplary embodiment of the present specification provides a secondary battery including the negative electrode according to the above-described exemplary embodiments, a positive electrode, and a separator.

In an exemplary embodiment of the present specification, the positive electrode may include a positive electrode current collector and a positive electrode active material layer formed on the positive electrode current collector and including the positive electrode active material. A thickness of the positive electrode active material layer may be 20 $\mu$m or greater and 500 $\mu$m or less.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

In an exemplary embodiment of the present specification, the positive electrode may include a lithium composite transition metal compound including nickel (Ni) and cobalt (Co), as an active material. The lithium composite transition metal compound may further include at least one of manganese and aluminum. The lithium composite transition metal compound may include 80 mol% or more, for example, 80 mol% or more and less than 100 mol% of nickel among metals other than lithium.

In an exemplary embodiment, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to a further exemplary embodiment of the present specification, the positive electrode active material layer according to the exemplary embodiment described above may further include a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a singlewalled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

The positive electrode and the negative electrode can be manufactured according to a conventional method for manufacturing a positive electrode and a negative electrode, except using the positive electrode and negative electrode active materials described above. Specifically, the electrode can be manufactured by applying a composition for active material layer formation, including the above-described active material and, optionally, a binder and a conductive material, onto a current collector, followed by drying and rolling. In this case, the types and contents of the positive electrode and negative electrode active materials, the binder, and the conductive material are as described above.

The composition for forming the active material layer may further include a solvent. Specifically, the solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. A used amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

An additional exemplary embodiment of the present specification provides a method for manufacturing the negative electrode for a secondary battery according to the above-described exemplary embodiments.

The manufacturing method is a method for manufacturing the negative electrode for a secondary battery including: forming a first negative electrode active material layer on a current collector; and forming a second negative electrode active material layer on the first negative electrode active material layer, wherein the first negative electrode active material layer may include natural graphite subjected to isotropic pressure processing or natural graphite having a BET specific surface area of 1 $m^2/g$ to 3 $m^2/g$, and wherein the second negative electrode active material layer may include artificial graphite in the form of a secondary particle and artificial graphite in the form of a single particle.

A secondary battery according to an exemplary embodiment of the present invention includes an assembly including a positive electrode, a negative electrode, a separator, and an electrolyte, and may be a lithium secondary battery.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

A further exemplary embodiment of the present invention provides a battery module including the aforementioned secondary battery as a unit cell, and a battery pack including the battery module. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Since the secondary battery according to the exemplary embodiments of the present invention stably exhibits excellent discharge capacity, output characteristics, and cycle performance, the secondary battery can be used as a power source of a portable device such as a mobile phone, a laptop computer, and a digital camera as well as a medium to large sized device selected from the group consisting of an electric vehicle, a hybrid electric vehicle, a plug-in hybrid electric vehicle and a power storage system. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**Example 1**

A first negative electrode slurry was prepared by metering natural graphite (adhesive force: 19 gF/cm) with an average particle diameter (D50) of 9 $\mu$m and subjected to isotropic pressure processing at a pressure of 80 MPa, SBR as a binder, CMC as a thickener, and carbon black as a conductive material to have a weight ratio of 96:1:2:1 (natural graphite: SBR: CMC: carbon black), adding distilled water and performing mixing. Next, a second negative electrode slurry was prepared by metering artificial graphite in the form of a secondary particle with an average particle diameter (D50) of 18 $\mu$m and artificial graphite (OI (004/110): 25) in the form of a single particle with an average particle diameter (D50) of 8.5 $\mu$m as a negative electrode active material, SBR as a binder, CMC as a thickener and carbon black as a conductive material to have a weight ratio of 95:1:3:1 (artificial graphite (secondary particle artificial graphite: single particle artificial graphite = 80:20): SBR: CMC: carbon black), adding distilled water, and performing mixing. The prepared first negative electrode slurry was coated on a copper foil electrode current collector to form a first negative electrode active material layer, and the prepared second negative electrode slurry was coated on a surface of the first negative electrode active material layer to form a second negative electrode active material layer, whereby a negative electrode was prepared. In this case, a weight ratio (natural graphite: artificial graphite) of the natural graphite included in the first negative electrode active material layer and the artificial graphite included in the second negative electrode active material layer is 30:70, and a weight ratio (secondary particle: single particle) of the artificial graphite in the form of a secondary particle and the artificial graphite in the form of a single particle is 80:20.

**Example 2**

A negative electrode was prepared in the same manner as in Example 1, except that natural graphite subjected to isotropic pressure processing with an average particle diameter (D50) of 9 μm and an adhesive force of 22 gF/cm was used.

**Example 3**

A negative electrode was prepared in the same manner as in Example 1, except that natural graphite subjected to isotropic pressure processing at a pressure of 90 MPa was used.

**Example 4**

A negative electrode was prepared in the same manner as in Example 1, except that a negative electrode active material in which a mixing ratio of secondary particle artificial graphite and single particle artificial graphite was 70:30 was used as the negative electrode active material of the second negative electrode slurry.

**Comparative Example 1**

A negative electrode was prepared in the same manner as in Example 1, except that only a negative electrode active material layer including artificial graphite in the form of a secondary particle with a particle diameter (D50) of 18 μm was formed as a negative electrode active material layer.

**Comparative Example 2**

A negative electrode was prepared in the same manner as in Example 1, except that a single-layered negative electrode active material layer including (mixed) artificial graphite in the form of a secondary particle with a particle diameter (D50) of 18 μm and artificial graphite in the form of a single particle with a particle diameter (D50) of 18 μm was formed as a negative electrode active material layer.

**Comparative Example 3**

A negative electrode was prepared in the same manner as in Example 1, except that a single-layered negative electrode active material layer including (mixed) artificial graphite in the form of a secondary particle with a particle diameter (D50) of 18 μm and natural graphite with a particle diameter (D50) of 9 μm not subjected to isotropic pressure processing was formed as a negative electrode active material layer.

**Comparative Example 4**

A negative electrode was prepared in the same manner as in Example 1, except that a first negative electrode active material layer including natural graphite with a particle diameter (D50) of 9 μm not subjected to isotropic pressure processing and a second negative electrode active material layer including artificial graphite in the form of a secondary particle with a particle diameter (D50) of 18 μm were formed as a negative electrode active material layer.

**Comparative Example 5**

A negative electrode was prepared in the same manner as in Example 1, except that a single-layered negative electrode active material layer including (mixed) natural graphite subjected to isotropic pressure processing with a particle diameter (D50) of 9 μm, artificial graphite in the form of a secondary particle with a particle diameter (D50) of 18 μm, and artificial graphite in the form of a single particle with a particle diameter (D50) of 9 μm was formed as a negative electrode active material layer.

**Comparative Example 6**

A negative electrode was prepared in the same manner as in Example 1, except that a single-layered negative electrode active material layer including (mixed) artificial graphite in the form of a secondary particle with a particle diameter (D50) of 18 μm and artificial graphite in the form of a single particle with a particle diameter (D50) of 9 μm was formed as a negative electrode active material layer.

**Comparative Example 7**

A negative electrode was prepared in the same manner as in Example 1, except that the second negative electrode slurry was coated on the surface of the copper foil electrode current collector to form a second negative electrode active material layer and the first negative electrode slurry was coated on the surface of the second negative electrode active material layer to form a first negative electrode active material layer.

The adhesive force between the negative electrode active material layer and the current collector of the prepared negative electrode and the cycle expansion performance of the battery prepared using the negative electrode prepared in the Examples and the Comparative Examples were measured and are shown in Table 1 below.

(1) Method for measuring adhesive force (gF/cm) of negative electrode active material layer: Each of the negative electrodes prepared in the Examples and the Comparative Examples was rolled and then dried in a vacuum oven at 130°C for 8 hours. Then, the negative electrode was punched to a predetermined size and fixed to the central portion of the slide glass using tape. Then, the peeling strength was measured while peeling off the negative electrode current collector using a UTM (Universal Testing Machine).

(2) Method for measuring cycle swelling performance (swelling ratio(%)@30$^{th}$cycle(Charge)): A positive electrode slurry was prepared by mixing $LiCoO_2$ as a positive electrode active material, Li-435 (manufactured by Denka) as a conductive material, a binder, and a thickener at a weight ratio of 96:2:2 (positive electrode active material: conductive material: binder + thickener), and adding N-methylpyrrolidone (NMP) as a solvent. The positive electrode slurry was applied to an aluminum foil, vacuumdried at about 130°C for 8 hours, and rolled to prepare a positive electrode with an area of 1.7671cm$^2$. In this case, the negative electrode was prepared so that loading of the positive electrode was about 3.4 mAh/cm$^2$. Full-cell secondary batteries in which the negative electrodes of the Examples and the Comparative Examples were applied were prepared by interposing a polyethylene separator between each of the negative electrodes prepared in the Examples and the Comparative Examples and the positive electrode prepared above, and then injecting an electrolyte solution. As the electrolyte solution, an electrolyte solution obtained by adding vinylene carbonate (VC) to 0.5 wt% in a non-aqueous electrolyte solution solvent in which ethylene carbonate (EC) and ethyl methyl carbonate (EMC) were mixed in a volume ratio of 1:4, and dissolving $LiPF_6$ to a concentration of 1M was used. The coin full-cell battery was charged and discharged at a charge range of SOC 0 to SOC 95, with the first cycle at 0.1C, the second cycle at 0.2C, and the third to 30th cycle at 0.5C. Thereafter, a swelling ratio was measured according to Equation 1 below.

$$[Equation\ 1]$$

$$swelling\ ratio\ (\%) = \{(t2-t1)/t1\}\ x\ 100$$

(t1 is a thickness of a negative electrode for a secondary battery before the first charge and discharge cycle, and t2 is a thickness of a negative electrode for a secondary battery after the 30th charge and discharge cycle.)

[Table 1]

| Negative electrode | Adhesive force (gF/cm) of negative electrode active material layer | Swelling ratio (%) @ 30$^{th}$ cycle (Charge) | BET specific surface area of natural graphite in first negative electrode active material layer (m$^2$/g) |
|---|---|---|---|
| Example 1 | 19 | 18 | 2.14 |
| Example 2 | 22 | 18 | 2.12 |
| Example 3 | 21 | 17 | 2.02 |
| Example 4 | 20 | 17 | 2.14 |
| Comparative Example 1 | 14 | 21 | - |
| Comparative Example 2 | 15 | 23 | - |

(continued)

| Negative electrode | Adhesive force (gF/cm) of negative electrode active material layer | Swelling ratio (%) @ 30th cycle (Charge) | BET specific surface area of natural graphite in first negative electrode active material layer ($m^2$/g) |
|---|---|---|---|
| Comparative Example 3 | 14 | 24 | 3.2 |
| Comparative Example 4 | 16 | 21 | 3.2 |
| Comparative Example 5 | 16 | 20 | 2.14 |
| Comparative Example 6 | 15 | 20 | - |
| Comparative Example 7 | 15 | 21 | 2.14 |

As shown in Table 1, it could be confirmed that the adhesive forces of the negative electrode active material layers and the cycle expansion performances of the batteries of Examples 1 to 4 were superior to the adhesive forces of the negative electrode active material layers and the cycle expansion performances of the batteries of Comparative Examples 1 to 7.

**Claims**

1. A negative electrode for a secondary battery, comprising:

   a current collector;
   a first negative electrode active material layer provided on the current collector; and
   a second negative electrode active material layer provided on the first negative electrode active material layer,
   wherein the first negative electrode active material layer comprises natural graphite subjected to isotropic pressure processing, and
   wherein the second negative electrode active material layer comprises artificial graphite in the form of a secondary particle and artificial graphite in the form of a single particle.

2. The negative electrode for a secondary battery of claim 1, wherein the natural graphite has a BET specific surface area of 1 $m^2$/g to 3 $m^2$/g.

3. The negative electrode for a secondary battery of claim 1, wherein the natural graphite has an average particle diameter (D50) of 6 $\mu$m to 9 $\mu$m.

4. The negative electrode for a secondary battery of claim 1, wherein the artificial graphite in the form of a single particle has an average particle diameter (D50) of 6 $\mu$m to 9 $\mu$m.

5. The negative electrode for a secondary battery of claim 1, wherein the artificial graphite in the form of a single particle has an OI (004/110) of 35 or less.

6. The negative electrode for a secondary battery of claim 1, wherein an adhesive force of the first negative electrode active material layer to the current collector is 18 gF/cm or higher.

7. The negative electrode for a secondary battery of claim 1, wherein the second negative electrode active material layer comprises the artificial graphite in the form of a secondary particle in an amount of 30 to 90 parts by weight based on 100 parts by weight of a negative electrode active material.

8. The negative electrode for a secondary battery of claim 1, wherein the second negative electrode active material layer comprises the artificial graphite in the form of a single particle in an amount of 10 to 30 parts by weight based on 100 parts by weight of a negative electrode active material.

9. A negative electrode for a secondary battery, comprising:

   a current collector;

a first negative electrode active material layer provided on the current collector; and
a second negative electrode active material layer provided on the first negative electrode active material layer,
wherein the first negative electrode active material layer comprises natural graphite having a BET specific surface area of 1 $m^2/g$ to 3 $m^2/g$, and
wherein the second negative electrode active material layer comprises artificial graphite in the form of a secondary particle and artificial graphite in the form of a single particle.

10. A secondary battery comprising the negative electrode of any one of claims 1 to 9, a positive electrode, and a separator.

11. A method for manufacturing a negative electrode for a secondary battery, the method comprising:

forming a first negative electrode active material layer on a current collector; and
forming a second negative electrode active material layer on the first negative electrode active material layer,
wherein the first negative electrode active material layer comprises natural graphite subjected to isotropic pressure processing or natural graphite having a BET specific surface area of 1 $m^2/g$ to 3 $m^2/g$, and
wherein the second negative electrode active material layer comprises artificial graphite in the form of a secondary particle and artificial graphite in the form of a single particle.

## INTERNATIONAL SEARCH REPORT

| International application No. |
|---|
| **PCT/KR2023/015662** |

| A. | CLASSIFICATION OF SUBJECT MATTER |
|---|---|

**H01M 4/133**(2010.01)i; **H01M 4/36**(2006.01)i; **H01M 4/583**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/133(2010.01); H01M 10/052(2010.01); H01M 10/0525(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 음극(anode), 등방압(isostatic press), 천연흑연 (natural graphite), 인조흑연(artificial graphite), 이차 입자(secondary particle), 단입자(single particle), 입경(diameter), BET 비표면적(BET surface area)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0090497 A (LG CHEM, LTD.) 02 August 2019 (2019-08-02)<br>See claims 1, 8 and 9; paragraphs [0010], [0070]-[0074] and [0096]; and figure 2. | 1-11 |
| Y | KR 10-2022-0034586 A (LG ENERGY SOLUTION, LTD.) 18 March 2022 (2022-03-18)<br>See claims 1, 7 and 9; and paragraphs [0037], [0043], [0104] and [0116]. | 1-11 |
| Y | KR 10-2016-0014539 A (LG CHEM, LTD.) 11 February 2016 (2016-02-11)<br>See claims 1 and 12. | 5 |
| A | KR 10-2338842 B1 (SAMSUNG SDI CO., LTD.) 10 December 2021 (2021-12-10)<br>See entire document. | 1-11 |
| A | KR 10-2014-0140952 A (POSCO CHEMTECH CO., LTD.) 10 December 2014 (2014-12-10)<br>See entire document. | 1-11 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 January 2024** | **01 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 567 918 A1

| INTERNATIONAL SEARCH REPORT | | | | International application No. | | | |
|---|---|---|---|---|---|---|---|
| Information on patent family members | | | | PCT/KR2023/015662 | | | |

| Patent document cited in search report | | | Publication date (day/month/year) | Patent family member(s) | | | Publication date (day/month/year) |
|---|---|---|---|---|---|---|---|
| KR | 10-2019-0090497 | A | 02 August 2019 | KR | 10-2553116 | B1 | 07 July 2023 |
| KR | 10-2022-0034586 | A | 18 March 2022 | CN | 116210102 | A | 02 June 2023 |
| | | | | EP | 4174986 | A1 | 03 May 2023 |
| | | | | EP | 4174986 | A4 | 29 November 2023 |
| | | | | US | 2023-0290930 | A1 | 14 September 2023 |
| | | | | WO | 2022-055308 | A1 | 17 March 2022 |
| KR | 10-2016-0014539 | A | 11 February 2016 | CN | 105794027 | A | 20 July 2016 |
| | | | | CN | 105794027 | B | 27 April 2018 |
| | | | | EP | 3054509 | A1 | 10 August 2016 |
| | | | | EP | 3054509 | A4 | 26 October 2016 |
| | | | | EP | 3054509 | B1 | 29 November 2017 |
| | | | | JP | 2017-530509 | A | 12 October 2017 |
| | | | | JP | 6464252 | B2 | 06 February 2019 |
| | | | | TW | 201619052 | A | 01 June 2016 |
| | | | | TW | I567025 | B | 21 January 2017 |
| | | | | US | 10361426 | B2 | 23 July 2019 |
| | | | | US | 2016-0276657 | A1 | 22 September 2016 |
| | | | | WO | 2016-018023 | A1 | 04 February 2016 |
| KR | 10-2338842 | B1 | 10 December 2021 | CN | 109478647 | A | 15 March 2019 |
| | | | | CN | 116154158 | A | 23 May 2023 |
| | | | | KR | 10-2018-0007618 | A | 23 January 2018 |
| | | | | US | 11705552 | B2 | 18 July 2023 |
| | | | | US | 2019-0229325 | A1 | 25 July 2019 |
| | | | | US | 2023-0307607 | A1 | 28 September 2023 |
| | | | | WO | 2018-012821 | A1 | 18 January 2018 |
| KR | 10-2014-0140952 | A | 10 December 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220132407

- KR 1020230133971